# FASCICULE DE BREVET EUROPEEN

(11) **EP 1 163 106 B1**
(45) Date de publication et mention de la délivrance du brevet: **14.05.2003**
(21) Numéro de dépôt: 00909420.2
(22) Date de dépôt: 03.03.2000
(51) Int. Cl.: B29D 11/00, B29C 37/00

(54) **PROCEDE DE DEMOULAGE D'UN ARTICLE EN MATERIAU POLYMERE TRANSPARENT ET SON UTILISATION POUR LA FABRICATION D'UN ARTICLE EN MATERIAU POLYMERE TRANSPARENT TEL QU'UNE LENTILLE OPHTALMIQUE**
VERFAHREN ZUR ENTFORMUNG EINES DURCHSICHTIGEN GEGENSTANDES UND DESSEN ANWENDUNG ZUR HERSTELLUNG EINES GEGENSTANDES AUS DURCHSICHTIGEM KUNSTSTOFF WIE Z.B. EINER KONTAKTLINSE
DEMOULDING METHOD FOR AN ARTICLE MADE OF TRANSPARENT POLYMER MATERIAL AND USE FOR MAKING A TRANSPARENT POLYMER ARTICLE SUCH AS AN OPHTHALMIC LENS

(30) Priorité: 17.03.1999 FR 9903291
(43) Date de publication de la demande: 19.12.2001
(73) Titulaire: ESSILOR INTERNATIONAL COMPAGNIE GENERALE D'OPTIQUE, 94227 Charenton cédex (FR)
(72) Inventeur: DE MARIGNAN, Gil, F-94100 Saint-Maur-des-Fossés (FR); DEROZIER, Gaston, F-94340 Joinville-le-Pont (FR)
(74) Mandataire: Catherine, Alain
(86) Numéro de dépôt international: FR0000538
(87) Numéro de publication internationale: WO00054961

(56) Documents cités:
- EP-A- 0 710 540
- WO-A-97/39880
- US-A- 3 171 869
- US-A- 5 750 156

## Description

La présente invention concerne de manière générale un procédé de démoulage d'articles en matériau polymère transparent, tels que des lentilles ophtalmiques (en particulier pour des lunettes), obtenus par coulée et polymérisation d'une composition liquide polymérisable dans la cavité d'un moule en deux parties.

Traditionnellement, les lentilles ophtalmiques en matériau polymère transparent (verre organique) sont fabriquées par coulée et polymérisation d'une composition liquide polymérisable dans la cavité formée entre les deux parties d'un moule en verre minéral, le tout étant maintenu par des moyens de fixation tels que des clips. Cet assemblage est communément appelé "sandwich".

Après polymérisation, on enlève les fixations et on procède au démoulage pour récupérer la lentille ophtalmique.

Les compositions liquides polymérisables utilisables sont très variables selon l'indice de réfraction souhaité pour la lentille ophtalmique.

Nombre de ces compositions, par exemple les compositions comprenant un monomère tel que le bis(allylcarbonate) de diéthylène glycol (CR39®), présentent lors de leur polymérisation des retraits importants de l'ordre de 7% ou plus, et généralement de 10% ou plus, ce qui crée des tensions dans la lentille ophtalmique au sein du sandwich.

Certaines lentilles ophtalmiques, en particulier des lentilles de puissance optique positive, peuvent présenter, de façon aléatoire, des défauts visibles lors de leur coloration ultérieure, par exemple par trempage dans une dispersion aqueuse de pigment. Ces défauts sont communément appelés "fougères" en raison de leur forme.

Ces défauts sont probablement dus à des relâchements brutaux des contraintes lors du démoulage, en particulier dans le cas des compositions présentant un retrait élevé à la polymérisation et des lentilles ophtalmiques de puissance optique positive.

Le brevet US-A-3 171 869 décrit un procédé de démoulage de lentilles ophtalmiques obtenues par polymérisation d'une composition liquide, en particulier présentant un retrait de polymérisation élevé, qui consiste juste avant l'achèvement de la polymérisation à chauffer le sandwich à une température de 125 à 235°C pour ramollir le matériau de la lentille et simultanément relacher la contrainte de polymérisation. Durant ce chauffage, le matériau polymérisé se sépare de la surface du moule.

Selon le brevet US-A-3 171 869, le procédé de démoulage réduit le risque de rupture des lentilles moulées lors du démoulage. Toutefois, la séparation entre la lentille moulée et la surface du moule qui intervient inévitablement lors du chauffage ou peu après le refroidissement, induit des contraintes susceptibles d'entraîner la formation de fougères.

Le document WO 97/39880 décrit un procédé de fabrication de lentilles comportant une étape de transfert thermique par conduction à partir de la surface du moule afin d'accroître le degré de polymérisation de surface de la lentille pour, lors d'une coloration ultérieure, obtenir une répartition plus homogène du colorant à la surface de la lentille.

Du fait du chauffage par conduction thermique à partir d'une surface du sandwich, il n'y a pas un chauffage homogène du sandwich, ce qui peut induire des contraintes dans la lentille polymérisée.

Il serait donc souhaitable de mettre au point un procédé de démoulage d'articles en matériau polymère transparent, tels que des lentilles, obtenus par polymérisation d'une composition liquide polymérisable dans la cavité d'un moule en deux parties qui diminue de façon significative le risque d'apparition de fougères et autres défauts lors de la coloration ultérieure des lentilles.

On atteint le but ci-dessus, selon la présente invention, par un procédé de démoulage d'un article en matériau polymère transparent formé dans une cavité d'un moule en deux parties, par polymérisation d'une composition liquide polymérisable, caractérisé en ce qu'il comprend :
a) le chauffage uniforme de l'article dans le moule, sans séparation de l'article et des parties de moule, à une température de démoulage comprise entre Tg + 20°C et Tg + 80°C, de préférence de + 30 à + 60°C, où Tg est la température de transition vitreuse du matériau polymère; et
b) l'application d'une force mécanique externe pour séparer au moins une des parties de moule de l'article pendant que ce dernier se trouve à ladite température de démoulage.

La température de démoulage est une caractéristique importante du procédé de l'invention. En effet, si la température est trop basse, il y aura un relachement brutal des contraintes lors du démoulage et apparition de défauts de type fougères dans les articles, et si la température est trop élevée, il existe un risque important de rupture et/ou de jaunissement de l'article. En général, la limite maximum de la température de démoulage est de l'ordre de 160°C. A titre d'exemple, dans le cas de la fabrication de lentilles ORMA®, obtenu par polymérisation d'une composition liquide comprenant un monomère diallyl carbonate de diéthylène glycol, la température de démoulage sera de l'ordre de 120°C.

Ce chauffage uniforme de l'article s'effectue pendant une durée généralement d'au moins 30 minutes et de préférence d'au moins 40 minutes.

Le chauffage du sandwich, et par suite de l'article moulé, à la température de démoulage, peut se faire par tout moyen approprié tel que convection pure, application d'un rayonnement infrarouge, mais se fait de préférence de façon mixte infrarouge/convection. Le chauffage doit s'effectuer de la manière la plus uniforme possible afin d'éliminer des gradients de température trop importants et de manière à éviter des démoulages prématurés par choc thermique qui conduisent à des articles comportant de nombreuses fougères. C'est en particulier le cas des lentilles ophtalmiques ayant des puissances optiques positives et tout spécialement des puissances optiques positives élevées, par exemple supérieures à +3,00 dioptries.

En général, avant la mise en oeuvre du procédé de la présente invention et après polymérisation, la température de l'assemblage du moule est abaissée à une températurede 20 à 60°C.

Bien que, selon le procédé de l'invention, généralement une seule des parties de moule soit séparée de l'article moulé lors de l'application de la force mécanique externe à la température de démoulage, l'autre partie étant séparée ultérieurement, il est possible de séparer simultanément les deux parties de moule de l'article moulé par l'application de cette force mécanique externe à la température de démoulage.

L'application de la force mécanique externe de séparation des parties de moule de l'article moulé peut, de manière commode, s'effectuer au moyen d'un outil agissant comme un levier entre les deux parties de moule.

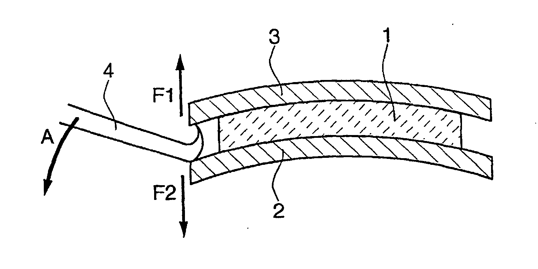

Ainsi, comme le montre la figure 1, illustrant une réalisation de l'opération de désassemblage des parties de moule selon l'invention, après moulage de la lentille ophtalmique 1 de puissance optique positive, et enlèvement, comme cela est classique, des clips et des joints maintenant les parties de moule 2, 3 lors du moulage, on insère entre ces parties de moule un outil 4 tel qu'une spatule.

Comme le montre la figure 1, l'outil 4 est inséré de manière à pouvoir agir comme un levier dont le point de pivotement est de préférence le point de contact de l'outil avec la surface interne de la partie convexe 2 du moule et une extrémité de l'outil mise en contact avec la surface interne de la partie concave 3 du moule. De ce fait, en appliquant à l'extrémité libre de l'outil une force dans le sens indiqué par la flèche A, l'outil, agissant comme un levier, exerce sur les parties de moule convexe et concave 2, 3, des forces externes de séparation F1 et F2, de sens opposés, assurant une séparation convenable d'au moins la partie concave 3 du moule alors que la lentille ophtalmique 1 se trouve à la température de démoulage.

A la place de la spatule, on peut aussi utiliser une machine semi-automatique.

Les exemples suivants illustrent la présente invention.

Les moules utilisés sont des moules classiques pour la fabrication de lentilles ophtalmiques de puissance optique positive et sont constitués d'une partie convexe et d'une partie concave en verre minéral et d'un joint en caoutchouc maintenus fermés à l'aide d'un clip.

On a moulé de manière classique des lentilles en verre organique ORMA® d'épaisseur 1,5 mm au centre, et de puissance +6 dioptries, au moyen des moules précédents.

Le monomère CR39® est mélangé avec 2,5 % de PIP (péroxy dicarbonate d'isopropyle). L'ensemble est filtré, dégazé puis coulé dans un assemblage constitué par deux parties de moule en verre minéral et d'un joint maintenus par un clip métallique.

L'ensemble est polymérisé dans une étuve avec un cycle thermique de 17 heures.

Après polymérisation, on a retiré les clips et les joints, lavé les sandwichs avec une solution aqueuse diluée de soude à - 70°C et après lavage, on a brossé les sandwichs pour parfaire le nettoyage.

En fin de lavage, brassage, les assemblages (sandwichs) sont généralement à une température de 25°C à 50°C.

On a soumis une première série de sandwichs propres et secs au procédé de désassemblage classique suivant.

Les sandwichs propres et secs sont réchauffés à environ 70°C dans une étuve, puis après sortie de l'étuve, on insère entre les parties de moule comme décrit précédemment, une spatule et on exerce une force de séparation externe au moyen de la spatule.

La partie concave du moule se sépare de la lentille cependant que généralement la lentille reste collée à la partie convexe du moule.

On sépare alors la lentille de la partie convexe par soufflage d'air et on la récupère.

(On peut alors réassembler les parties de moule avec un nouveau joint en prenant soin d'éviter l'introduction de poussière, et procéder au moulage d'une nouvelle lentille en procédant comme précédemment).

On a soumis une seconde série de sandwichs au procédé de désassemblage selon l'invention, en réchauffant les sandwichs propres et secs à 120°C au moyen du cycle suivant :
1. Passage dans une première étuve à 80°C (durée 30 à 45 minutes)
2. Passage dans une seconde étuve à 100-110°C (durée 30 à 45 minutes)
3. Exposition à un rayonnement infrarouge pour atteindre 120°C environ (durée 50 secondes).

Les sandwichs sont alors immédiatement désassemblés à la température de 120°C au moyen d'une spatule glissée entre les parties de moule et en procédant comme décrit ci-dessus.

La partie concave du moule se sépare de la lentille, cependant que généralement la lentille reste collée sur la partie convexe.

Après refroidissement, on sépare la partie convexe du moule de la lentille comme ci-dessus.

Les deux séries de lentilles sont ensuite soumises à une étape de coloration consistant à immerger les lentilles dans un bain aqueux renfermant des colorants à l'état dispersé et maintenu à une température proche de 95°C.

On a déterminé pour chacune des séries de lentilles le taux d'apparition de fougères. On a trouvé que pour les lentilles de la première série (désassemblage classique à 70°C), le taux d'apparition de fougères est de 50% environ, alors que pour les lentilles de la seconde série, démoulées par le procédé de l'invention, ce taux était inférieur à 2 %.

Ainsi, le procédé de démoulage selon l'invention permet une réduction très importante du taux d'apparition de fougères dans des lentilles ophtalmiques.

## Revendications

1. Procédé de démoulage d'un article en matériau polymère transparent formé dans une cavité d'un moule en deux parties par polymérisation d'une composition polymérisable liquide, **caractérisé en ce qu'**il comprend :
a) le chauffage uniforme de l'article dans le moule, à une température de démoulage comprise entre Tg + 20°C et Tg + 80°C, où Tg est la température de transition vitreuse du matériau polymère transparent, sans séparation de l'article et des parties de moule; et
b) l'application d'une force mécanique externe pour séparer au moins une des parties de moule de l'article pendant que ce dernier se trouve à ladite température de démoulage.

2. Procédé selon la revendication 1, **caractérisé en ce que** le chauffage uniforme de l'article dans le moule s'effectue pendant une durée d'au moins 30 minutes, de préférence d'au moins 40 minutes.

3. Procédé de démoulage selon la revendication 1 ou 2, **caractérisé en ce que** le matériau polymère transparent présente un retrait de polymérisation d'au moins 7% et de préférence d'au moins 10%.

4. Procédé selon l'une quelconque des revendications 1 à 3, **caractérisé en ce que** le matériau polymère transparent résulte de la polymérisation d'une composition liquide polymérisable comprenant un monomère diallyl carbonate de diéthylène glycol.

5. Procédé selon l'une quelconque des revendications 1 à 4, **caractérisé en ce que** l'application de la force mécanique externe s'effectue au moyen d'un outil agissant comme un levier sur les parties de moule.

6. Procédé selon la revendication 5, **caractérisé en ce que** les parties de moule comprennent une partie convexe et une partie concave.

7. Procédé selon la revendication 6, **caractérisé en ce que** l'outil agissant comme un levier a un point de pivotement situé sur la partie convexe.

8. Procédé selon la revendication 7, **caractérisé en ce que** seule la partie concave est séparée de l'article moulé lors de l'application de la force mécanique externe.

9. Procédé selon l'une quelconque des revendications précédentes, **caractérisé en ce que** l'article est une lentille ophtalmique.

10. Procédé selon la revendication 9, **caractérisé en ce que** la lentille ophtalmique est une lentille de puissance optique positive.

11. Procédé selon l'une quelconque des revendications 1 à 10, **caractérisé en ce qu'**après polymérisation, et avant la mise en oeuvre du procédé selon l'une quelconque des revendications 1 à 10, la température de l'assemblage est abaissée à une température de 20 à 60°C.

12. Procédé selon l'une quelconque des revendications 1 à 11, **caractérisé en ce que** la température de démoulage est comprise entre Tg + 30°C et Tg + 60°C.

13. Procédé de fabrication d'un article moulé en matériau polymère transparent, comprenant le coulage d'une composition liquide polymérisable dans une cavité d'un moule en deux parties et la polymérisation de la composition coulée pour former l'article moulé, **caractérisé en ce que** l'article moulé est démoulé par le procédé selon l'une quelconque des revendications 1 à 12.

14. Procédé selon la revendication 13, **caractérisé en ce qu'**il comprend une étape ultérieure de coloration, après démoulage, de l'article moulé.

## Patentansprüche

1. Verfahren zur Entformung eines Gegenstands aus durchsichtigem Polymermaterial, gebildet in einem Hohlraum einer zweiteiligen Form mittels Polymerisation einer flüssigen polymerisierbaren Zusammensetzung, **dadurch gekennzeichnet, daß** das Verfahren umfaßt:
a) die gleichförmige Erwärmung des Gegenstands in der Form auf eine Entformungstemperatur zwischen Tg + 20°C und Tg + 80°C, wobei Tg die Verglasungsübergangs- temperatur des transparenten oder durchsichtigen Polymermaterials ist, und zwar ohne Trennung des Gegenstands und der Teile der Form; und
b) die Anwendung einer mechanischen äußeren Kraft zum Trennen zumindest eines Teils der Form von dem Gegenstand solange letzterer die Entformungstemperatur hat.

2. Verfahren nach Anspruch 1, **dadurch gekennzeichnet, daß** die gleichförmige Erwärmung des Gegenstands in der Form während einer Dauer von zumindest 30 Minuten erfolgt, insbesondere bevorzugt von zumindest 40 Minuten.

3. Verfahren zur Entformung nach Anspruch 1 oder 2, **dadurch gekennzeichnet, daß** das durchsichtige Polymermaterial eine Polyrnerisationsschrumpfung von zumindest 7 %, insbesondere bevorzugt von zumindest 10 % aufweist.

4. Verfahren nach einem der Ansprüche 1-3, **dadurch gekennzeichnet, daß** das durchsichtige oder transparente Polymermaterial aus der Polymerisation einer flüssigen polyimerisierbaren Zusammensetzung resultiert, die ein Di-Ethylen-Glykol-Dialyl-Carbonat-Monomer urnfasst.

5. Verfahren nach einem der Ansprüche 1-4, **dadurch gekennzeichnet, daß** die Anwendung der mechanischen äußeren Kraft mittels eines Werkzeugs erfolgt, das wie ein Hebel auf die Teile der Form wirkt.

6. Verfahren nach Anspruch 5, **dadurch gekennzeichnet, daß** die Teile der Form einen konvexen Teil und einen konkaven Teil umfassen.

7. Verfahren nach Anspruch 6, **dadurch gekennzeichnet, daß** das Werkzeug, das wie ein Hebel wirkt, einen Schwenkpunkt an dem konvexen Teil oder Abschnitt aufweist.

8. Verfahren nach Anspruch 7, **dadurch gekennzeichnet, daß** lediglich der konkave Teil oder Abschnitt von dem geformten oder gegossenen Gegenstand während der Anwendung der externen mechanischen Kraft getrennt wird.

9. Verfahren nach einem der vorangegangenen Ansprüche, **dadurch gekennzeichnet, daß** der Gegenstand eine ophtalmische Linse ist.

10. Verfahren nach Anspruch 9, **dadurch gekennzeichnet, daß** die ophtalmische Linse eine Linse mit positiver optischen Stärke ist.

11. Verfahren nach einem der Ansprüche 1-10, **dadurch gekennzeichnet, daß** nach Polymerisation und vor Durchführung des Verfahrens nach einen der Ansprüche 1-10 die Temperatur der Anordnung auf eine Temperatur von 20° bis 60° C gesenkt wird.

12. Verfahren nach einem der Ansprüche 1-11, **dadurch gekennzeichnet, daß** die Entformungstemperatur zwischen Tg + 30°C und Tg + 60 °C beträgt.

13. Verfahren zur Herstellung eines geformten oder gegossenen Gegenstands aus durchsichtigem Polymermaterial, umfassend das Einfließenlassen einer flüssigen polymerisierbaren Zusammensetzung in einen Hohlraum einer zweiteiligen Form und die Polymerisation der eingeflossenen Zusammensetzung zum Ausbilden des geformten oder gegossenen Gegenstands, **dadurch gekennzeichnet, daß** der gegossenen Gegenstand mittels eines Verfahrens nach einem der Ansprüche 1-12 entformt wird.

14. Verfahren nach Anspruch 13, **dadurch gekennzeichnet, daß** es den anschließenden Schritt der Färbung nach Entformung des gegossenen Gegenstands umfaßt.

## Claims

1. A method of releasing from the mold a transparent polymer material article formed in a cavity of a two-part mold by polymerizing a liquid polymerizable composition, **characterised in that** it comprises :
a) uniformly heating said article in said mold to a mold release temperature in the range from Tg + 20°C to Tg + 80°C, where Tg is the glass transition temperature of the transparent polymer material, without separating said article and said mold parts, and
b) applying an external mechanical force to separate at least one of said mold parts from said article while it is at said mold release temperature.

2. The method according to claim 1 **characterised in that** said article is uniformly heated in said mold for at least 30 minutes, preferably at least 40 minutes.

3. The method according to claim 1 or 2 **characterised in that** said transparent polymer material is a material that shrinks at least 7% and preferably at least 10% on polymerization.

4. The method according to any one of claims 1 to 3 **characterised in that** said transparent polymer material is produced by polymerizing a polymerizable liquid composition comprising a diethylene glycol diallyl carbonate monomer.

5. The method according any one of claims 1 to 4 **characterised in that** said external mechanical force is applied by means of a tool operating as a lever on said mold part.

6. The method according to claim 5 **characterised in that** said mold parts comprise a convex part and a concave part.

7. The method according to claim 6 **characterised in that** said tool operating as a lever has a fulcrum on said convex part.

8. The method according to claim 7 **characterised in that** only said concave part is separated from said molded article on application of said external mechanical force.

9. The method according to any one of the previous claims **characterised in that** said article is an ophthalmic lens.

10. The method according to claim 9 **characterised in that** said ophthalmic lens is a positive optical power lens.

11. The method according to any one of claims 1 to 10 **characterised in that** after polymerization and before implementing the method according to any one of claims 1 to 10, the temperature of said assembly is reduced to a temperature in the range from 20°C to 60°C.

12. The method according to any one of claims 1 to 11 **characterised in that** said mold release temperature is in the range from Tg + 30°C to Tg + 60°C.

13. A method of making an article molded from a transparent polymer material including casting a polymerizable liquid composition into a cavity of a two-part mold and polymerizing the cast composition to form the molded article, **characterised in that** said molded article is removed from said mold by the method according to any one of claims 1 to 12.

14. A method according to claims 13 **characterised in that** it comprises a later coloring step after mold releasing of the molded article.
